# EUROPÄISCHE PATENTANMELDUNG

(11) **EP 2 674 343 A2**
(43) Veröffentlichungstag der Anmeldung: **18.12.2013**
(21) Anmeldenummer: 13002349.2
(22) Anmeldetag: 02.05.2013
(51) Int. Cl.: B60W 40/09, B60W 50/00

(54) **Verfahren und Vorrichtung zum Bestimmen des Fahrverhaltens von Fahrzeugführern**

(30) Priorität: 16.06.2012 DE 102012011977
(71) Anmelder: WABCO GmbH, 30453 Hannover (DE)
(72) Erfinder: Stender, Axel, 31787 Hameln (DE)

(57) **Zusammenfassung**

Die Erfindung betrifft ein Verfahren sowie eine Vorrichtung zum Bestimmen des Fahrverhaltens von Fahrzeugführern, insbesondere von Fahrern von Kraftfahrzeugen und Anhängefahrzeugen (1), bei dem für jeden Fahrzeugführer die im Fahrbetrieb auftretenden Querbeschleunigungen und/oder Längsbeschleunigungen bewertet sowie in Klassen eingruppiert werden, und aus diesen Werten ein Indikator zum Bestimmen des Fahrverhaltens des Fahrzeugführers ermittelt wird. Hierdurch soll ermöglicht werden, das Fahrverhalten bzw. die Fahrweise eines Fahrzeugführers oder die Behandlung eines Fahrzeugs zu beurteilen und gegebenenfalls Nachschulungen durchzuführen.

## Beschreibung

Die Erfindung betrifft ein Verfahren sowie eine Vorrichtung zum Bestimmen des Fahrverhaltens von Fahrzeugführern, insbesondere von Fahrern von Kraftfahrzeugen und Anhängefahrzeugen, sowie die Verwendung eines Betriebsdatenspeichers eines Fahrzeugs zum Aufzeigen der Einsatzbedingungen des Fahrzeugs bei der Durchführung des Verfahrens.

Eine Untersuchung, die darauf abzielte, aussagekräftige Daten über das Fahrverhalten von nicht alkoholisierten und alkoholisierten Personen zu erhalten, ist unter dem Titel UDS-ALK-Projekt in der Fachzeitschrift Verkehrsunfall und Fahrzeugtechnik, April 1998, Heft 4 veröffentlicht worden. Es wurde untersucht, inwieweit Fahrdaten, die mit Hilfe eines Unfalldatenspeichers (UDS) erfasst wurden, in einem rechtsmedizinischen Gutachten vor Gericht verwertet werden können. Dazu befuhr eine Personengruppe unterschiedlichen Alters, Geschlechts, Körpermasse und Alkoholverträglichkeit einen Testparcours mit und ohne Alkoholbelastung. Der Testparcours umfasste eine Beschleunigungsstrecke, eine scharfe Linkskurve, eine Rechts-Linkskurvenkombination sowie zwei weitere, zum Teil nicht einsehbare Kurven. Darüber hinaus wurden die Fahrer mit so genannten "Eye-Catchern" konfrontiert. Es wurden charakteristische Muster im personenbezogenen Fahrverhalten festgestellt, die sich nach dem Ergebnis der Studie auch bei Alkoholbelastung fortsetzen. Diese Verhaltensmuster zeigten sich in vergleichbaren Geschwindigkeitssteigerungen, ähnlich scharfem Abbremsen vor den Fußgängerattrappen oder synchronen Lenkstrategien. Die Hälfte der Probanden fuhr alkoholisiert schneller als im nüchternen Zustand. Es ergab sich der Eindruck, dass diejenigen Fahrer, die bei Geschwindigkeit und Querbeschleunigung "Draufgängertum" erkennen ließen, erkennbare Schwierigkeiten im alkoholisierten Zustand hatten, eine harmonische und damit kontrollierte Kurvenfahrt zu bewerkstelligen. Die Untersuchung sollte fortgesetzt werden, um einen Beitrag zu der Frage zu leisten, ob Alkoholbeeinflussung im konkreten Fall die alleinige Unfallursache sein kann.

Ein Unfalldatenspeicher für Kraftfahrzeuge hat fast die gleiche Aufgabe wie an sich bekannte Flugdatenschreiber für Luftfahrzeuge. Er wird in Kraftfahrzeuge auf freiwilliger Basis eingebaut, um über die Vorgänge bei einem Unfall genauere Erkenntnisse zu erhalten. Der Unfalldatenspeicher misst mittels geeigneter Sensoren ständig verschiedene Daten des Fahrzeugs, wie Geschwindigkeit, Bewegungsrichtung, Fahrzeugbeschleunigung in Längs- und Querrichtung, Status der Beleuchtung, Blinker- und Bremstätigkeit usw., und zeichnet diese für einige Minuten auf, bevor sie automatisch durch aktuellere Daten überschrieben werden. Im Falle eines Unfalls, der durch eine starke Beschleunigung oder Verzögerung des Fahrzeugs infolge eines Aufpralls auf ein Hindernis erkannt wird, bleiben mindestens die letzten 30 Sekunden dauerhaft gespeichert. So lässt sich nach einem Unfall sehr viel einfacher das Geschehen rekonstruieren, damit sich gegebenenfalls die Frage des Verschuldens klären lässt.

Ein derartiger Unfalldatenspeicher lässt sich nicht ohne weiteres zum Ermitteln des Fahrverhaltens eines Fahrzeugführers verwenden, da die verschiedenen Daten des Fahrzeugs zwar ständig aufgenommen werden, jedoch nach wenigen Minuten wieder automatisch gelöscht werden. Dementsprechend konnte das oben genannte UDS-ALK-Projekt auch nur über einen kurzen Testparcours durchgeführt werden, so dass die so ermittelten Daten nur bedingt für die Beurteilung des allgemeinen Fahrverhaltens eines Fahrzeugführers brauchbar sind.

Vor diesem Hintergrund lag der Erfindung die Aufgabe zugrunde, Daten zu gewinnen, die einen Rückschluss auf das Fahrverhalten bzw. die Fahrweise eines Fahrzeugführers und auf seine Behandlung eines Fahrzeugs zulassen.

Ausgehend von dieser Aufgabenstellung wird ein Verfahren zum Bestimmen des Fahrverhaltens von Fahrzeugführern, insbesondere von Fahrern von Kraftfahrzeugen und Anhängefahrzeugen vorgeschlagen, bei dem für jeden Fahrzeugführer die im Fahrbetrieb auftretenden Querbeschleunigungen mittels eine Querbeschleunigungssensors und/oder die Längsbeschleunigungen mittels eines Längsbeschleunigungssensors gemessen, in einem Computer bewertet sowie in Klassen eingruppiert werden, und aus so ermittelten Werten ein Indikator zum Bestimmen des Fahrverhaltens des Fahrzeugführers ermittelt wird.

Dieser Indikator lässt auf einfache Weise erkennen, ob es sich beim jeweiligen Fahrer um einen solchen mit defensiver Fahrweise oder einen Fahrzeugführer mit offensiver Fahrweise handelt.

Die laufenden Betriebskosten von Kraftfahrzeugen werden durch die Art von dessen Nutzung wesentlich beeinflusst. Wird ein Kraftfahrzeug überwiegend offensiv gefahren, erhöhen sich zwangsläufig auch die laufenden Kosten für Kraftstoff, Reifen, Unterhalt und spätere Reparaturen. Hieraus folgt, dass sich diese Kosten senken lassen, wenn für den jeweiligen Fahrzeugführer der Indikator zum Bestimmen des Fahrverhaltens vorliegt und ein Fahrzeugführer mit offensivem Fahrverhalten zu einer Nachschulung veranlasst werden kann, um sein Fahrverhalten in Richtung einer defensiven Fahrweise zu ändern. Dies ist für den Betrieb von Nutzfahrzeugen besonders vorteilhaft.

Um den Indikator des Fahrverhaltens zu ermitteln, können während wenigstens einer Fahrt eines Fahrzeugführers auf wenigstens einer Fahrstrecke diese Fahrstrecke und die beim Befahren dieser Fahrstrecke auftretenden Werte der Querbeschleunigungen und/oder der Längsbeschleunigungen gemessen, die Fahrstreckenanteile, die in vorgegebenen Beschleunigungsintervallen zwischen Null und einem Maximum zurückgelegt werden, gespeichert und die prozentuale Häufigkeitsverteilung der Fahrstreckenanteile über den Beschleunigungsintervallen bestimmt sowie vorzugsweise in auswertbarer Form dargestellt werden.

Einen aussagekräftigen Indikator erhält man auch, wenn während wenigstens einer Fahrt eines Fahrzeugführers auf wenigstens einer Fahrstrecke die beim Befahren dieser Fahrstrecke auftretenden Werte der Querbeschleunigung und/oder der Längsbeschleunigung ermittelt werden und gezählt wird, wie oft die Werte der Querbeschleunigung und/oder der Längsbeschleunigung in vorgegebenen Beschleunigungsintervallen zwischen Null und einem Maximum auftreten, und die prozentuale Häufigkeitsverteilung der Werte der Querbeschleunigung und/oder der Längsbeschleunigung über den Beschleunigungsintervallen in auswertbarer Form dargestellt werden.

Diese Darstellung kann in den beiden genannten Fällen beispielsweise so erfolgen, dass die prozentuale Häufigkeitsverteilung als Säulendiagramm auf einem Bildschirm eines Computers abrufbar dargestellt und/oder mittels eines Druckers ausgedruckt wird. Aus dem Säulendiagramm geht dann in augenfälliger Weise hervor, ob der jeweilige Fahrzeugführer besonders häufig stark beschleunigt und/oder abbremst, Kurven relativ schnell durchfährt und/oder abrupte Lenkbewegungen durchführt, beispielsweise beim Spurwechsel oder bei Ausweichmanövern.

Zusätzlich zur Darstellung des Indikators in Form eines Säulendiagramms kann aus den Häufigkeitsverteilungen als Indikator für das Fahrverhalten ein Mittelwert oder ein entsprechend der Klassenbreite gewichteter Mittelwert gebildet sowie für Vergleiche herangezogen werden, beispielsweise dem Säulendiagramm überlagert abgebildet und/oder ausgedruckt werden.

Der Indikator lässt sich auch in Form eines Histogramms darstellen, in dem über den Klassen direkt aneinander angrenzende Rechtecke errichtet werden, deren Flächeninhalte die relative Klassenhäufigkeit darstellen. Die Höhe der Rechtecke repräsentiert die relative Häufigkeitsdichte, also die relative Häufigkeit dividiert durch die Breite der entsprechenden Klasse.

Um einen augenfälligen Unterschied zwischen einer defensiven Fahrweise und einer offensiven Fahrweise durch den gewichteten Mittelwert darzustellen, wird das Gewicht der Intervalle mit zunehmender Beschleunigung zunehmend erhöht.

Als Klassengrenzen der Querbeschleunigungen und/oder der Längsbeschleunigungen für die Darstellung des Säulendiagramms können beispielsweise die Werte 0 - 1 m/s², 1 - 1,5 m/s², 1,5 - 2,0 m/s², 2,0 - 2,5 m/s², 2,5 - 3,0 m/s², 3,0 - 3,5 m/s², 3,5 - 4,0 m/s² sowie > 4,0 m/s² genutzt und in diesen Intervallen die prozentuale Häufigkeitsverteilung in Form eines Säulendiagramms abgebildet und/oder ausgedruckt werden.

Der Indikator zum Bestimmen des Fahrverhaltens kann für jeden Fahrzeugführer im Fahrbetrieb auf einer beliebigen Strecke ermittelt werden, vorzugsweise wird dieser Indikator jedoch für jeden Fahrzeugführer im gesamten Fahrbetrieb auf allen Fahrstrecken ermittelt, so dass sich zeitliche Veränderungen des individuellen Fahrverhaltens feststellen lassen.

Die Querbeschleunigungen und/oder die Längsbeschleunigungen lassen sich mittels Beschleunigungssensoren messen und in einem Computer weiterverarbeiten, jedoch ist es auch möglich, die Querbeschleunigungen und/oder die Längsbeschleunigungen in einem Computer rechnerisch aus den Werten von Radgeschwindigkeitssensoren zu bestimmen und weiterzuverarbeiten. Radgeschwindigkeitssensoren sind bei allen Fahrzeugen mit einem Antiblockiersystem vorhanden, die direkt die Fahrstrecke, die Fahrgeschwindigkeit und aus der Ableitung der Fahrgeschwindigkeit die Längsbeschleunigung liefern. Die Querbeschleunigung bei einer Kurvenfahrt ergibt sich ebenfalls auf einfache Weise aus der Differenz der Raddrehzahlen der kurvenäußeren Räder gegenüber den kurveninneren Rädern.

Da heutige Kraftfahrzeuge mit Computern ausgestattet sind, die eine vergleichsweise große Speicherkapazität und Rechengeschwindigkeit aufweisen, um die geforderten Berechnungen in Echtzeit durchführen zu können, wird die eingangs erwähnte Aufgabe auch durch die Verwendung eines Betriebsdatenspeichers eines Fahrzeugs zum Aufzeigen der Einsatzbedingungen des Fahrzeugs bei der Durchführung des vorstehend definierten Verfahrens sowie zur Analyse und Auswertung der Fahrzeugbenutzung des betriebenen Fahrzeugs direkt am Fahrzeug oder außerhalb gelöst, insbesondere in Verbindung mit einem im Fahrzeug installierten elektronischen Bremssystem und/oder einem Abstandsregelungssystem und/oder einem Antiblockiersystem und/oder einem Anfahrschlupfregelungssystem und/oder einem Stabilitätsregelungssystem und/oder einem Fahrdynamikregelungssystem und/oder einem Kippschutz-Stabilitätsunterstützungssystem und/oder einem Kippschutz-Stabilitätsregelungssystem.

Diese verschiedenen Systeme sind in unterschiedlichen Kombinationen oder auch alle in die Fahrzeugelektronik integriert oder als unabhängige Peripheriesysteme konfiguriert und arbeiten mit einem Zentralcomputer zusammen. Sie werden allgemein als Fahrerassistenzsysteme bezeichnet.

Die Erfindung betrifft auch eine Vorrichtung zur Bestimmung des Fahrverhaltens von Fahrzeugführern, gekennzeichnet durch einen Zentralcomputer mit einem Betriebsdatenspeicher, wobei der Zentralcomputer zumindest mit einem elektronischen Bremssystem, einem Abstandsregelsystem, einem Antiblockiersystem, einem Kippschutz-Stabilitätsunterstützungssystem, einem elektronischen Stabilitätsregelungssystem, einem Fahrdynamikregelungssystem, einem Längsbeschleunigungssensor, einem Querbeschleunigungssensor und einem Kippschutz-Stabilitätsunterstützungssystem verbunden ist.

Die Erfindung wird nachstehend anhand eines in der Zeichnung dargestellten Ausführungsbeispiels weiter erläutert. In der Zeichnung zeigt
Fig. 1 eine schematische Draufsicht auf ein Anhängefahrzeug, bestehend aus einem Sattelschlepper und einem Sattelauflieger,
Fig. 2 eine schematische Darstellung eines Elektroniksystems zum Ermitteln eines Indikators zum Anzeigen des Fahrverhaltens eines Fahrers,
Fig. 3 ein Säulendiagramm zur Auswertung des Fahrverhaltens eines Fahrers mit defensiver Fahrweise, und
Fig. 4 ein Säulendiagramm zur Auswertung des Fahrverhaltens eines Fahrers mit offensiver Fahrweise.

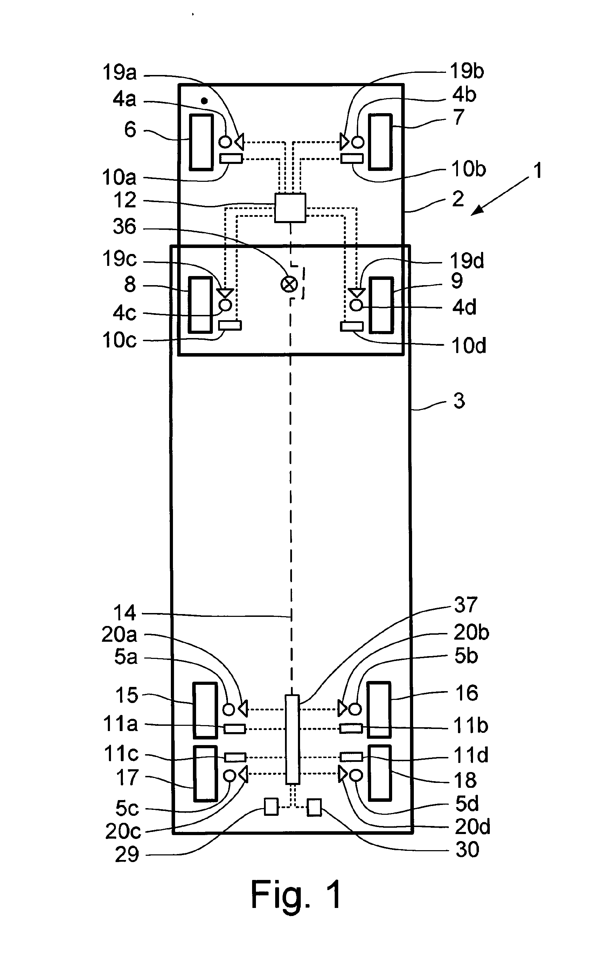

In Fig. 1 ist in schematischer Darstellung in einer Draufsicht ein Anhängefahrzeug 1 dargestellt, das aus einem Sattelschlepper 2 und einem Sattelauflieger 3 besteht, welche über einen Drehzapfen 36 miteinander verbunden sind. Der Sattelschlepper 2 weist lenkbare Vorderräder 6, 7 und antreibbare Hinterräder 8, 9 auf, die in bekannter Weise durch Luftfederbälge 4a, 4b, 4c, 4d abgefedert sind. Der Sattelauflieger 3 weist Räder 15, 16 an einer vorderen Hinterachse und Räder 17, 18 an einer hinteren Hinterachse auf, die ebenfalls über Luftfederbälge 5a, 5b, 5c, 5d abgefedert sind. Der aktuelle Luftdruck in den Luftfederbälgen 4a-4d, 5a-5d ist mittels diesen zugeordneten Luftdrucksensoren 19a-19d, 20a-20d messbar und über gepunktet gezeichnete Sensorleitungen und/oder über einen separaten Analog-Digital-Wandler 37 und eine Datenleitung 14 (beispielsweise eine CAN-Bus-Leitung) einem an dem Sattelschlepper 2 angeordneten Zentralcomputer 12 zuleitbar. Gegebenenfalls reicht auch die Anordnung von nur einem Luftdrucksensor an einem der Luftfederbälge 4a-4d, 5a-5d des Sattelschleppers 2 und/oder des Sattelaufliegers 3 aus.

An den Rädern 6, 7, 8, 9 des Sattelschleppers 2 und an den Rädern 15, 16, 17, 18 des Sattelaufliegers 3 sind zudem Drehzahlsensoren 10a, 10b, 10c, 10d, 11a, 11b, 11c, 11d angeordnet, die direkt über gepunktet gezeichnete Sensorleitungen oder über die zumindest eine Datenleitung 14 mit dem Zentralcomputer 12 verbunden sind. Gegebenenfalls reicht die Anordnung von minimal zwei Drehzahlsensoren aus, beispielsweise an einem Rad des Sattelschleppers 2 und einem Rad des Sattelaufliegers 3.

Sofern eine Übertragung über einen CAN-Bus erfolgt, werden die Drehzahlmesswerte in an sich bekannter Weise zuvor mittels des Analog-Digital-Wandlers 37 digitalisiert. Der Analog-Digital-Wandler 37 ist an dem Sattelauflieger 3 angeordnet. Erkennbar sind die Luftdrucksensoren 20a - 20d am Sattelauflieger 3 über einen solchen Analog-Digital-Wandler 37 mit der Datenleitung 14 verbunden, welche direkt zum Zentralcomputer 12 am Sattelschlepper 2 führt. Außerdem sind an dem Sattelauflieger 3 ein Längsbeschleunigungssensor 29 und ein Querbeschleunigungssensor 30 angeordnet, die ebenfalls über den Analog-Digital-Wandler 37 und die Datenleitung 14 mit dem Zentralcomputer 12 verbunden sind.

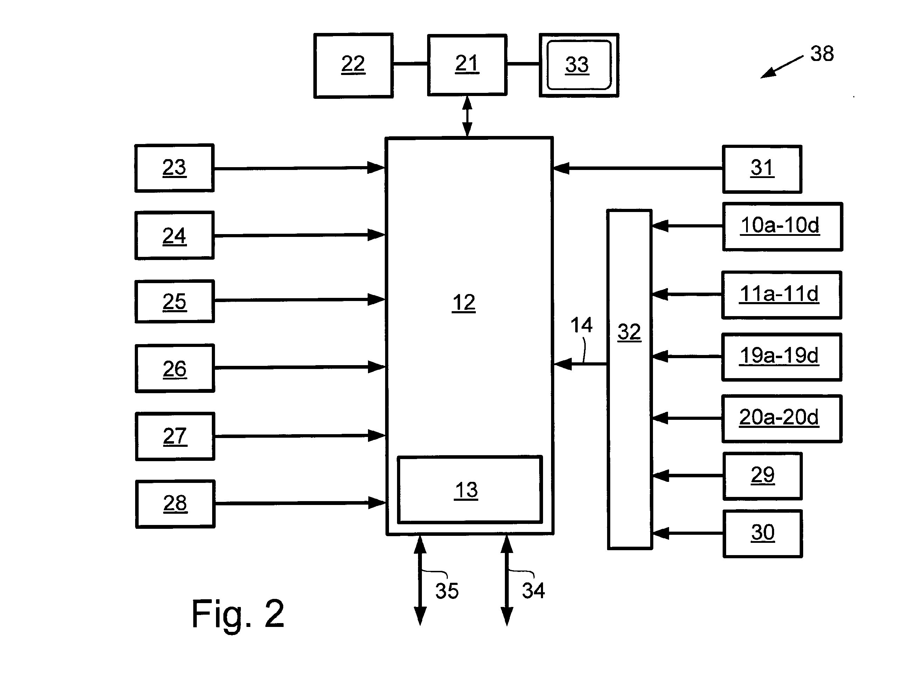

Fig. 2 zeigt eine Vorrichtung 38 zur Bestimmung des Fahrverhaltens von Fahrzeugführern, die gemäß den gerade beschriebenen Verfahrensmerkmalen arbeiten kann. Sie weist einen Zentralcomputer 12 mit einem Betriebsdatenspeicher 13 auf, und der Zentralcomputer 12 wirkt mit einer Reihe von Peripheriesystemen zusammen. Es handelt sich in diesem Ausführungsbeispiel bei den Peripheriesystemen um folgende Vorrichtungen:

Ein elektronisches Bremssystem 23, das dazu dient, die Bremskomponenten elektronisch zu aktivieren, wodurch die Reaktions- und Druckaufbauzeit in den Bremszylindern des Fahrzeugs verringert wird. Dadurch wird wiederum der Bremsweg verkürzt, was in bestimmten Situationen von entscheidendem Vorteil ist. Dies wird ermöglicht durch die Integration einer Retarder- und Motorbremse während des Bremsvorgangs, die Anpassung der Bremskraftverteilung an die Lastverteilung und die Bremskompatibilität zwischen dem Sattelschlepper 2 und dem Sattelauflieger 3. Dadurch ist eine komfortable Verzögerungsregelung mit kontinuierlicher Selbstkontrolle über integrierter Diagnose- und Überwachungsfunktionen möglich.

Ein Abstandsregelungssystem 24 weist einen Radarsensor, einen Gierratensensor sowie ein elektronisches Steuersystem in einer Einheit auf und ermöglicht eine automatische Kontrolle des Abstands zum vorausfahrenden Fahrzeug, eine akustische oder visuelle Warnung, wenn der Abstand ein kritisches Maß unterschreitet, ein automatisches Abbremsen und somit einen besseren Fahrkomfort sowie eine höhere Sicherheit mit geringerem Fahrzeugverschleiß und Kraftstoffverbrauch.

Des Weiteren ist ein Antiblockiersystem 25 vorgesehen, das in bekannter Weise ein Blockieren der Räder verhindert, insbesondere bei starker Betätigung der Bremse auf Straßen mit niedrigem Reibwert. In dieses Antiblockiersystem 25 ist ein Anfahrschlupfregelungssystem integriert. Mittels des Antiblockiersystems 25 mit dem integrierten Anfahrschlupfregelungssystem ist die Seitenführung der eingebremsten Räder sogar bei voller Einbremsung gegeben. Die Stabilität und Lenkbarkeit des Anhängefahrzeugs 1 bleibt innerhalb der physikalischen Grenzen erhalten, woraus eine Optimierung der Verzögerung und des Anhalteweges unter der Voraussetzung der Lenkbarkeit folgt. Die insgesamt verfügbare Bodenhaftung der Reifen auf der Straße lässt sich somit sowohl beim Einbremsen als auch beim Anfahren nutzen.

Mittels eines Kippschutz-Stabilitätsunterstützungssystems 26 lässt sich ein Umkippen des Anhängefahrzeugs 1, soweit wie technisch möglich, ausschließen. Dieses Kippschutz-Stabilitätsunterstützungssystem 26 ermittelt Fahrzeugdaten, wie etwa eine Radgeschwindigkeit, Ladungsdaten und über einen integrierten Sensor die Querbeschleunigung des Fahrzeugs. Durch eine schnelle und effektive Analyse dieser Daten werden Risikosituationen erkannt, bei denen es zu einem Überrollen des Anhängefahrzeugs 1 kommen könnte und aktiviert dann die Bremsen automatisch. Obwohl kein System die Gesetze der Physik überwinden und ein Anhänger weiterhin umkippen kann, wenn die Seitenkräfte extrem hoch sind oder während des Bremsens ansteigen, so reduziert doch das Kippschutz-Stabilitätsunterstützungssystem 26 dieses Risiko in signifikanter Weise.

Des Weiteren ist ein Stabilitätsregelungssystem 27 vorhanden, bei dem es sich um ein aktives Sicherheitssystem handelt, das in stabilitätskritischen Fahrsituationen stabilisierend eingreift. Im Rahmen der physikalischen Grenzen arbeitet das elektronische Stabilitätsregelungssystem 27 automatisch und greift in Fahr- und Bremssituationen ein, in denen der Fahrer möglicherweise die Kontrolle über das Fahrzeug verlieren könnte. Das Stabilitätsregelungssystem 27 bietet eine Fahrerassistenz in kritischen Fahrsituationen, indem es auf Fahrbahnen mit hohen und niedrigen Reibwerten regelt, wodurch die Richtungsstabilität speziell bei dynamischen Manövern verbessert wird. Es führt zu einer signifikanten Minderung des Risikos, dass der Sattelschlepper 2 und der Sattelauflieger 3 umkippen, einknicken oder schleudern. Auf diese Weise wird die Verfügbarkeit des Anhängefahrzeugs 1, unabhängig von Verkehrsbedingungen, Fahrbahnbeschaffenheit oder Ladung verbessert.

Ein Fahrdynamikregelungssystem 28 ist als getrenntes System dargestellt, es kann aber vorzugsweise in das Stabilitätsregelungssystem 27 integriert sein und ergänzt die Wirkungsweise dieses Stabilitätsregelungssystems 27.

Zusätzlich ist noch ein Kippschutz-Stabilitätsunterstützungssystem 31 vorhanden, das den Funktionsumfang des Antiblockiersystems 25 erweitert. Dieses System 31 greift automatisch ein, wenn während des Fahrens ein hohes Umkipprisiko erkannt wird. Hierdurch wird das Risiko von Umkippunfällen durch Senkung der Geschwindigkeit bei zu hoher lateraler Beschleunigung entschärft. Es kommt zu einer verbesserten Richtungsstabilität, indem es automatisch in Situationen eingreift, in denen die Fahrzeugstabilität einen kritischen Bereich erreicht. Zu diesem Zweck erfolgt eine aktive Kontrolle von Motor und Bremsen.

Die für alle diese Funktionen erforderlichen Fahrzeugdaten werden durch die Drehzahlsensoren 10a-10d, 11a-11d, die Luftdrucksensoren 19a-19d, 20a-20d, den Längsbeschleunigungssensor 29 und den Querbeschleunigungssensor 30 generiert sowie über die in Fig. 1 gepunktet gezeichneten Sensorleitungen und/oder die Datenleitung 14 eines CAN-Datenbussystems 32 dem Zentralcomputer 12 zugeleitet.

Der Sattelauflieger 3 ist mit dem Sattelschlepper 2 über eine zeichnerisch nicht dargestellte Versorgungsleitung für Druckluft, eine Steuerleitung 34 für die Steuersignale und eine Bremslichtleitung 35 verbunden, so dass das Anhängefahrzeug 1 insgesamt über die verschiedenen Systeme 23, 24, 25, 26, 27, 28, 31 einen sicheren Fahrbetrieb gewährleistet.

Mit dem Zentralcomputer 12 lässt sich außerdem ein externer Computer 21 mit Bildschirm 33 und einem Drucker 22 verbinden.

Um einen Indikator zum Bestimmen des Fahrverhaltens eines Fahrzeugführers, insbesondere eines Fahrzeugführers von Kraftfahrzeugen und Anhängefahrzeugen, zu ermitteln, werden die im Betriebsdatenspeicher 13 eintreffenden momentanen Daten der Querbeschleunigung des Sattelaufliegers 3 und/oder des Sattelschleppers 2 und die momentanen Daten der Längsbeschleunigung des Sattelaufliegers 3 und/oder des Sattelschleppers 2 aus dem Querbeschleunigungssensor 30 und/oder dem Längsbeschleunigungssensor 29 oder aus den Messwerten der Drehzahlsensoren 10a-10c, 11a-11c ermittelt.

Die Querbeschleunigung ist ein Indikator für die jeweilige Geschwindigkeit, mit der eine Kurve durchfahren wird, oder die bei einem Spurwechsel oder Ausweichmanöver gegeben ist. Die Längsbeschleunigung ist ein Maß für das Beschleunigungs-und/oder Bremsverhalten des Fahrzeugführers. Die Querbeschleunigung und die Längsbeschleunigung weisen bei einem Fahrer mit defensiver Fahrweise weniger Extremwerte auf, während bei einem Fahrer mit offensiver Fahrweise mehr scharfe Brems- und Beschleunigungsmanöver sowie schnellere Kurvendurchfahrten und Ausweichmanöver bzw. Spurwechsel mit höherer Geschwindigkeit zu verzeichnen sind.

Um sich ein Bild vom Fahrverhalten eines Fahrzeugführers machen zu können, werden während wenigstens einer Fahrt des Fahrzeugführers auf wenigstens einer Fahrstrecke diese Fahrstrecke und die beim Befahren dieser Fahrstrecke auftretenden Werte der Querbeschleunigung und/oder der Längsbeschleunigung ermittelt, die Fahrstreckenanteile, die in vorgegebenen Beschleunigungsintervallen zwischen Null und einem Maximum zurückgelegt werden, gespeichert, und anschließend die prozentuale Häufigkeitsverteilung der Fahrstreckenanteile über den Beschleunigungsintervallen in auswertbarer Form dargestellt.

Es ist auch möglich, während wenigstens einer Fahrt eines Fahrzeugführers auf wenigstens einer Fahrstrecke die beim Befahren dieser Fahrstrecke auftretenden Werte der Querbeschleunigungen und/oder der Längsbeschleunigungen zu ermitteln und zu zählen, wie oft die Werte der Querbeschleunigungen und/oder der Längsbeschleunigungen in vorgegebenen Beschleunigungsintervallen zwischen Null und einem Maximum auftreten, und anschließend die prozentuale Häufigkeitsverteilung der Werte der Querbeschleunigung und/oder der Längsbeschleunigung über den Beschleunigungsintervallen in auswertbarer Form darzustellen.

Vorzugsweise wird der Indikator zum Bestimmen des Fahrverhaltens für jeden Fahrzeugführer im gesamten Fahrbetrieb auf allen Fahrstrecken ermittelt.

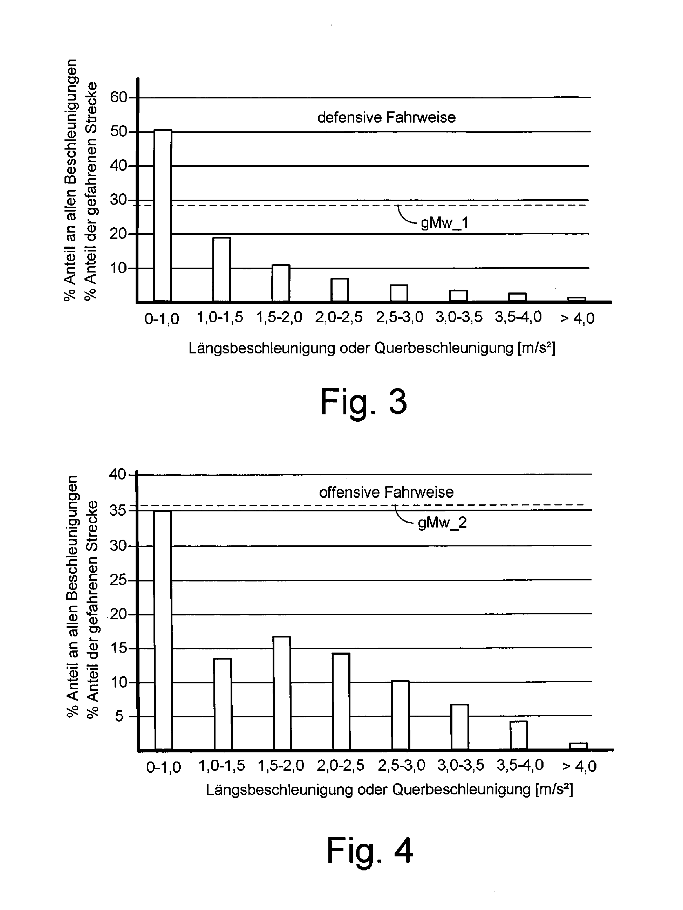

Die Figuren 3 und 4 zeigen die prozentuale Häufigkeitsverteilung als Säulendiagramm auf einem Bildschirm eines Computers 21 als abrufbare Darstellung oder als Ausdruck des Druckers 22.

Die Fig. 3 zeigt ein Säulendiagramm, das einen Fahrzeugführer mit defensiver Fahrweise kennzeichnet. Es sind die prozentualen Anteile der Fahrstrecke über vorgegebene Querbeschleunigungs- und/oder Längsbeschleunigungsintervalle dargestellt. Es ist ersichtlich, dass die Streckenanteile mit niedrigen Querbeschleunigungen bzw. die Streckenanteile mit geringen Längsbeschleunigungen sowie Längsverzögerungen überwiegen und in Richtung zu den hohen Werten kontinuierlich abnehmen.

Ein gewichteter Mittelwert wMw_1 dieser Anteile, der in der Weise ermittelt wird, dass die Werte der Säulen vom niedrigsten bis zum höchsten Wert mit den Faktoren 1, 2, 3, 4, 5, 6, 7, 8 multipliziert werden, ergibt einen Wert von etwa 27%.

Die Darstellung des Fahrverhaltens eines Fahrzeugführers hinsichtlich der Querbeschleunigungswerte und der Längsbeschleunigungswerte lässt sich auch in einem gruppierten Säulendiagramm darstellen, in dem die prozentuale Häufigkeitsverteilung der Fahrstreckenanteile über den Querbeschleunigungsintervallen und den Längsbeschleunigungsintervallen auf einem mit einem Computer 21 verbundenen Bildschirm 33 abrufbar dargestellt und/oder mittels eines Druckers 22 ausgedruckt werden.

Ebenso lässt sich das Säulendiagramm mit einer prozentualen Häufigkeitsverteilung der Werte der Querbeschleunigung und der Längsbeschleunigung über den Beschleunigungsintervallen in einem gruppierten Säulendiagramm auf dem Bildschirm 33 des Computers 21 abrufbar darstellen und/oder mittels eines Druckers 22 ausdrucken.

Als Klassengrenzen der Querbeschleunigungen und/oder der Längsbeschleunigungen wurden die Werte 0 - 1 m/s², 1 - 1,5 m/s², 1,5 - 2,0 m/s², 2,0 - 2,5 m/s², 2,5 - 3,0 m/s², 3,0 - 3,5 m/s², 3,5 - 4,0 m/s² sowie über 4,0 m/s² gewählt. Andere Einteilungen sind möglich.

Das Säulendiagramm gemäß Fig. 4 ist nach den gleichen Prinzipien wie das Säulendiagramm gemäß Fig. 3 erstellt und zeigt deutlich die unterschiedliche Fahrweise eines offensiv agierenden Fahrzeugführers. Der prozentuale Anteil der Kilometer bzw. der Beschleunigung im Bereich 0 - 1 m/s² liegt deutlich niedriger als beim Beispiel gemäß Fig. 3, während die entsprechenden Werte im Beschleunigungsbereich von 1 - 1,5 m/s² bis 3,5 - 4,0 m/s² deutlich höher liegen. Dementsprechend erreicht der gewichtete Mittelwert wMw_2 der prozentualen Anteile einen sehr viel höheren Wert etwa 37%, was ebenfalls die offensive Fahrweise dieses Fahrers klar verdeutlicht.

Die Ermittlung der Querbeschleunigungen lässt sich anstatt mittels eines Querbeschleunigungssensors 30 auch rechnerisch aus den Werten der Drehzahlsensoren 10a - 10d, 11a - 11d und eines nicht dargestellten Lenkwinkelsensors bestimmen. In ähnlicher Weise lässt sich die Längsbeschleunigung ebenfalls aus den Werten der Drehzahlsensoren 10a - 10d, 11a- 11d ermitteln, indem diese Werte rechnerisch differenziert werden.

Alle oder einige der Systeme 23, 24, 25, 26, 27, 28, 31 lassen sich in dem Zentralcomputer 12 integrieren, wenn dieser mit einer entsprechenden Datenverarbeitungskapazität ausgestattet wird.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen und beanspruchten Merkmalskombinationen beschränkt. Vielmehr sind alle Merkmalskombinationen als offenbart zu betrachten.

## Patentansprüche

1. Verfahren zum Bestimmen des Fahrverhaltens von Fahrzeugführern, insbesondere von Fahrern von Kraftfahrzeugen und Anhängefahrzeugen (1), bei dem für jeden Fahrzeugführer die im Fahrbetrieb auftretenden Querbeschleunigungen und/oder Längsbeschleunigungen bewertet sowie in Klassen eingruppiert werden, und aus diesen Werten ein Indikator zum Bestimmen des Fahrverhaltens des Fahrzeugführers ermittelt wird.

2. Verfahren nach Anspruch 1, **dadurch gekennzeichnet, dass** während wenigstens einer Fahrt eines Fahrzeugführers auf wenigstens einer Fahrstrecke diese Fahrstrecke und die beim Befahren dieser Fahrstrecke auftretenden Werte der Querbeschleunigungen und/oder der Längsbeschleunigungen ermittelt, die Fahrstreckenanteile, die in vorgegebenen Beschleunigungsintervallen zwischen Null und einem Maximum zurückgelegt werden, gespeichert und die prozentuale Häufigkeitsverteilung der Fahrstreckenanteile über den Beschleunigungsintervallen bestimmt werden.

3. Verfahren nach Anspruch 1, **dadurch gekennzeichnet, dass** während wenigstens einer Fahrt eines Fahrzeugführers auf wenigstens einer Fahrstrecke diese Fahrstrecke und die beim Befahren dieser Fahrstrecke auftretenden Werte der Querbeschleunigungen und/oder der Längsbeschleunigungen ermittelt, die Fahrstreckenanteile, die in vorgegebenen Beschleunigungsintervallen zwischen Null und einem Maximum zurückgelegt werden, gespeichert und die prozentuale Häufigkeitsverteilung der Fahrstreckenanteile über den Beschleunigungsintervallen bestimmt und in auswertbarer Form dargestellt werden.

4. Verfahren nach Anspruch 1, **dadurch gekennzeichnet, dass** während wenigstens einer Fahrt eines Fahrzeugführers auf wenigstens einer Fahrstrecke die beim Befahren dieser Fahrstrecke auftretenden Werte der Querbeschleunigungen und/oder der Längsbeschleunigungen ermittelt werden und gezählt wird, wie oft die Werte der Querbeschleunigungen und/oder der Längsbeschleunigungen in vorgegebenen Beschleunigungsintervallen zwischen Null und einem Maximum auftreten, und die prozentuale Häufigkeitsverteilung der Werte der Querbeschleunigungen und/oder die Längsbeschleunigungen über den Beschleunigungsintervallen in auswertbarer Form dargestellt werden.

5. Verfahren nach einem der vorherigen Ansprüche, **dadurch gekennzeichnet, dass** die prozentuale Häufigkeitsverteilung als Säulendiagramm auf einem Bildschirm eines Computers (21) abrufbar dargestellt und/oder mittels eines Druckers (22) ausgedruckt wird.

6. Verfahren nach einem der vorherigen Ansprüche, **dadurch gekennzeichnet, dass** aus den Häufigkeitsverteilungen als Indikator für das Fahrverhalten ein Mittelwert oder ein entsprechend der Klassenbreite gewichteter Mittelwert (wMw_1 ,wMw_2) gebildet wird.

7. Verfahren nach einem der vorherigen Ansprüche, **dadurch gekennzeichnet, dass** als Klassengrenzen der Querbeschleunigungen und/oder der Längsbeschleunigungen die Werte 0-1 m/s², 1-1,5 m/s², 1,5-2,0 m/s², 2,0-2,5 m/s², 2,5-3,0 m/s², 3,0-3,5 m/s², 3,5-4,0 m/s² sowie > 4,0 m/s² genutzt und in diesen Intervallen die prozentuale Häufigkeitsverteilung in Form eines Säulendiagramms abgebildet und/oder ausgedruckt wird.

8. Verfahren nach einem der vorherigen Ansprüche, **dadurch gekennzeichnet, dass** der Indikator zum Bestimmen des Fahrverhaltens für jeden Fahrzeugführer im Fahrbetrieb auf einer beliebigen Fahrstrecke ermittelt wird.

9. Verfahren nach einem der vorherigen Ansprüche, **dadurch gekennzeichnet, dass** der Indikator zum Bestimmen des Fahrverhaltens für jeden Fahrzeugführer im gesamten Fahrbetrieb auf allen Fahrstrecken ermittelt wird.

10. Verfahren nach einem der vorherigen Ansprüche, **dadurch gekennzeichnet, dass** die Querbeschleunigungen und/oder die Längsbeschleunigungen mittels Beschleunigungssensoren (29, 30) gemessen und in einem Computer (12) weiterverarbeitet werden.

11. Verfahren nach einem der vorherigen Ansprüche, **dadurch gekennzeichnet, dass** die Querbeschleunigungen und/oder die Längsbeschleunigungen in einem Computer (12) rechnerisch aus den Werten von Radgeschwindigkeitssensoren (10, 11) bestimmt und weiterverarbeitet werden.

12. Verwendung eines Betriebsdatenspeichers (13) eines Fahrzeugs (1) zum Aufzeigen der Einsatzbedingungen des Fahrzeugs (1) bei der Durchführung des Verfahrens nach einem der Ansprüche 1 bis 11 und zur Analyse sowie Auswertung der Fahrzeugbenutzung des betriebenen Fahrzeugs (1) direkt am Fahrzeug (1) oder au ßerhalb, in Verbindung mit einem im Fahrzeug (1) installierten elektronischen Bremssystem (23) und/oder einem Abstandsregelungssystem (24) und/oder einem Antiblockiersystem (25) und/oder einem Anfahrschlupfregelungssystem (26) und/oder einem Stabilitätsregelungssystem (27) und/oder einem Fahrdynamikregelungssystem (28) und/oder einem Kippschutz-Stabilitätsunterstützungssystem (31) und/oder einem Kippschutz-Stabilitätsregelungssystem (26).

13. Vorrichtung zur Bestimmung des Fahrverhaltens von Fahrzeugführern gemäß zumindest einem der vorherigen Verfahrensansprüche, **gekennzeichnet durch** einen Zentralcomputer (12) mit einem Betriebsdatenspeicher (13), wobei der Zentralcomputer (12) zumindest mit einem elektronischen Bremssystem (23), einem Abstandsregelsystem (24), einem Antiblockiersystem (25), einem Kippschutz-Stabilitätsunterstützungssystem (26), einem elektronischen Stabilitätsregelungssystem (27), einem Fahrdynamikregelungssystem (28), einem Längsbeschleunigungssensor (29), einem Querbeschleunigungssensor (30) und einem Kippschutz-Stabilitätsunterstützungssystem (31) verbunden ist.
